# EUROPÄISCHE PATENTSCHRIFT

(11) **EP 1 637 786 B1**
(45) Veröffentlichungstag und Bekanntmachung des Hinweises auf die Patenterteilung: **28.02.2007**
(21) Anmeldenummer: 05013564.9
(22) Anmeldetag: 23.06.2005
(51) Int. Cl.: F16L 9/12

(54) **Einrichtung zur Lecküberwachung und Leckmeldung**
Device for monitoring and signalling leaks
Dispositif de surveillance et notification de fuites

(30) Priorität: 16.09.2004 DE 202004014411 U
(43) Veröffentlichungstag der Anmeldung: 22.03.2006
(73) Patentinhaber: BRUGG Rohr AG, Holding, 5200 Brugg (CH)
(72) Erfinder: Oeschger, Alfred, 5276 Will (AG) (CH); Demuth, Roland, 5400 Ennetbaden (CH); Homann, Jörn, Dipl.-Ing., 30655 Hannover (DE); Bittner, Herbert, 31515 Wunstorf (DE)

(56) Entgegenhaltungen:
- WO-A-86/01621
- DE-A1- 3 010 279
- DE-A1- 3 032 573

## Beschreibung

Die Erfindung betrifft eine Einrichtung zur Lecküberwachung und Leckmeldung nach dem Oberbegriff des Anspruchs 1 bzw. 2.

Aus der DE 30 10 279 A ist eine Lecküberwachungs- und Leckmeldeeinrichtung einer Fernheizleitung bekannt, bei welcher Meldeadern in den Nuten eines parallel zur Längsachse der Fernheizleitung verlaufenden Blocks aus Kunststoff oder geschäumten Kunststoff angeordnet sind. Der Block wird auf dem Innenrohr der Fernheizleitung fixiert.

Aus der DE 30 32 573 ist ein wärmeisoliertes Leitungsrohr bekannt, bei welchem ein wendelförmig verlaufender Abstandshalter aus Schaumstoff auf das Innenrohr aufgewickelt ist. Der Abstandshalter weist an seiner dem Außenrohr zugekehrten Fläche eine in Längsrichtung des Abstandshalters durchgehend verlaufende Aussparung auf, in welcher ein Meldeleiter angeordnet ist.

Nachteilig bei beiden bekannten Lösungen ist, daß ein erheblicher Aufwand zur Herstellung des Blocks bzw. des Abstandshalters getrieben werden muß.

Aus der WO 03/060454 ist eine Meßvorrichtung zur Feststellung von Leckstellen in Fernwärmeversorgungsleitungen, Pipelines oder Tanks mit einem Meßsensor bekannt. Als Meßsensor ist ein Sensorkabel mit mindestens einem in Einbettungsmaterial eingebetteten Lichtwellenleiter verwendet. Im Falle eines Lecks tritt eine Erhöhung der Dämpfung des Lichtwellenleiters ein, die aus einer Verformung des Lichtwellenleiters infolge einer Volumensveränderung des den Lichtwellenleiter umgebenden Materials resultiert.

Im Falle einer Biegung der Fernwärmeleitung wie sie beispielsweise bei der Herstellung von flexiblen Leitungen durch Aufwickeln auf eine Kabeltrommel, aber auch bei der Verlegung auftritt, wird der Lichtwellenleiter gedehnt bzw. in extremen Fällen reißt der Lichtwellenleiter.

Der vorliegenden Erfindung liegt die Aufgabe zugrunde, eine kostengünstige Lösung anzugeben, durch welche der Meldeleiter während der Fertigung aber auch während der Verlegung gegen übermäßige Zugspannungen geschützt ist.

Diese Aufgabe wird durch das im Kennzeichen des Anspruchs 1 bzw. 2 Erfaßte gelöst.

Weitere vorteilhafte Ausgestaltungen der Erfindung sind in den Unteransprüchen erfaßt.

Die Erfindung ist anwendbar für das Widerstandsreferenzmeßsystem, für das "nordische System" aber auch für das in der WO 03/060454 beschriebene Meßsystem.

Bei dem Widerstandsreferenzmeßsystem sind in der Isolierschicht im Abstand zum Innenrohr ein Widerstandsdraht mit einer perforierten Isolierschicht sowie ein Kupferleiter mit einer durchgehenden Isolierschicht verlegt. Bei diesem System wird der Widerstand zwischen dem Widerstandsdraht und dem metallischen Innenrohr gemessen. Im Falle einer Leckage sinkt der Widerstand ab. Nach der Widerstandsreferenzmeßmethode kann die Schadensstelle ziemlich genau eingemessen werden.

Bei dem "nordischen System" sind zwei blanke Kupferleiter in einem über die gesamte Länge der Fernheizleitung gleichen Abstand zum Innenrohr in der Isolierschicht im Abstand zueinander angeordnet. Mittels eines Impulsreflektometers wird ein Signal in einen der Leiter eingespeist, welches an der Schadensstelle reflektiert wird. Auch dieses System gestattet eine Meldung und Ortung einer Schadensstelle, wobei die Meldung nach der Widerstandsreferenzmeßmethode und die Ortung nach der Impuls-Reflexions-Methode durchgeführt wird.

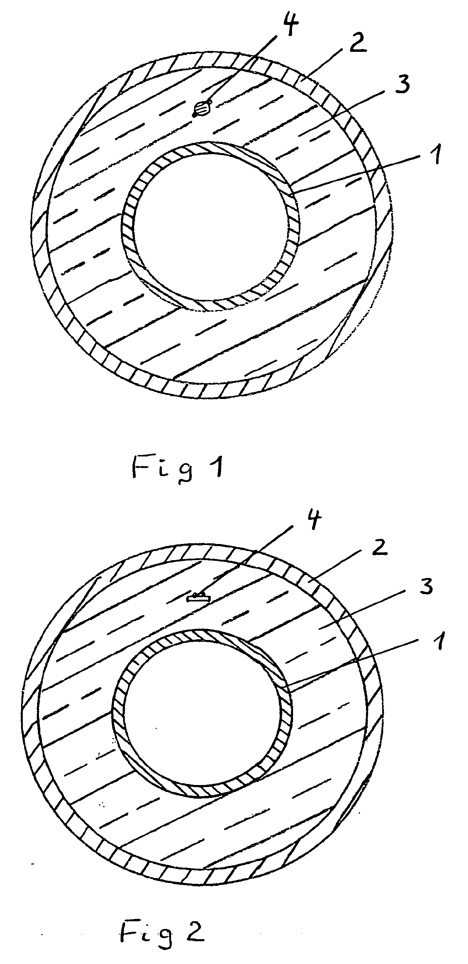

Die Erfindung ist anhand der in den Figuren 1 bis 4 schematisch dargestellten Ausführungsbeispiele näher erläutert.

In der Figur 1 ist ein Schnitt durch ein wärmeisoliertes Leitungsrohr, bestehend aus einem Innenrohr 1, einem Außenrohr 2 sowie einer Wärmedämmschicht 3 zwischen Innenrohr 1 und Außenrohr 2 dargestellt. Ein Meldeleiter 4 befindet sich innerhalb der Wärmedämmschicht. Der Meldeleiter besteht aus einem runden Strang, auf welchem sich die eigentlichen Meldeadern befinden. Das Innenrohr 1 kann wie das Außenrohr 2 auch aus Kunststoff oder Metall bestehen. Flexible wärmeisolierte Leitungsrohre mit einem Innenrohr und einem Außenrohr aus Kunststoff sind unter dem Handelsnamen CALPEX auf dem Markt erhältlich. Flexible wärmeisolierte Leitungsrohre mit einem Innenrohr aus Metall und einem Außenrohr aus Kunststoff sind unter dem Handelsnamen CASAFLEX bekannt. Wärmeisolierte Leitungsrohre mit einem Innenrohr aus Metall und einem Außenmantel aus Metall oder Kunststoff sind der Fachwelt unter dem Handelsnamen FLEXWELL FERNHEIZKABEL oder als sog. Kunststoffmantelrohre bekannt.

In der Figur 2 ist ebenfalls ein wärmeisoliertes Leitungsrohr im Schnitt dargestellt, bei welchem eine weitere Ausführungsform eines Meldeleiters 4 dargestellt ist. Der Meldeleiter 4 besteht hier aus einem flachen Träger, auf dem die Meldeadern fixiert sind.

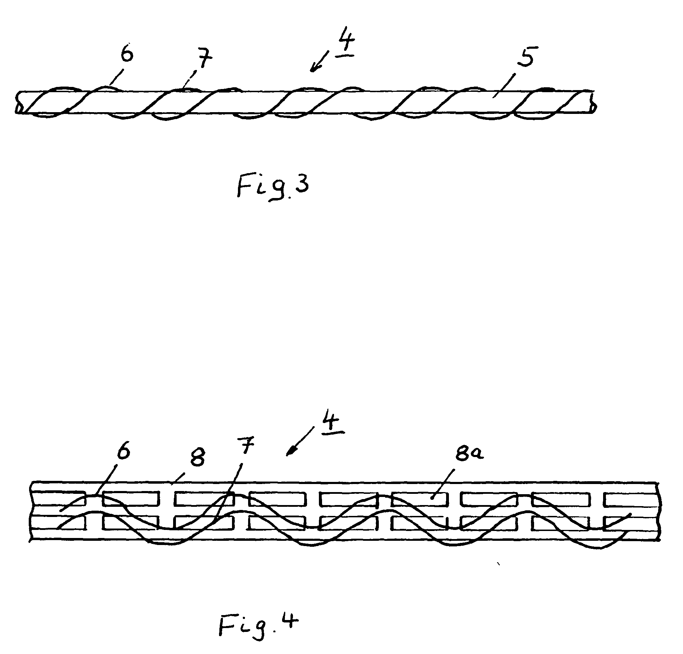

Anhand der Figuren 3 und 4 sollen die Meldeleiter näher beschrieben werden.

Der Meldeleiter 4 nach Figur 3 besteht aus einem runden Träger 5, auf den zwei Meldeadern 6 und 7 aufgeseilt sind. Die Meldeader 6 kann aus einem metallischen Leiter bestehen, welcher mit einer Isolierung versehen ist, die Perforationen aufweist. Die Meldeader 7 ist in der Regel ein blanker Kupferdraht.

Der Träger 5 besteht aus einem Werkstoff, der bei einer Belastung auf Zug bis zu einer bestimmten Grenze einer elastischen Verformung unterzogen wird. Dabei verringert sich der Durchmesser des Trägers 5 mit der Folge, daß die Meldeadern 6 und 7 innerhalb bestimmter Grenzen nahezu kräftefrei gehalten werden können. Werkstoffe, die sich wie oben beschrieben verhalten, sind beispielsweise Polyamid und Polyvinylchlorid.

In der Figur 4 ist eine Ausgestaltung der Erfindung gezeigt, bei welcher der Meldeleiter 4 aus einem bandförmigen Träger 8 besteht, auf welchem die Meldeadern 6 und 7 fixiert sind, z. B. durch Kleben.

Der bandförmige Träger 8 besteht zweckmäßigerweise aus zugfestem Papier.

Der bandförmige Träger 8 weist eine Vielzahl von Durchbrechungen 8a auf, welche den Durchtritt von flüssigem Kunststoffschaum im Falle der Verwendung des Meldeleiters 4 für wärmeisolierte Leitungsrohre ermöglichen.

Die Meldeadern 6 und 7 sind wellenförmig auf dem Träger 8 befestigt, so daß eine Verformungsreserve entsteht, die im Falle einer Biegung des Rohres ein Abreißen der Meldeadern verhindert.

Sowohl bei der Ausführung nach Fig. 3 als auch nach der Ausführung bei Figur 4 ist die Länge der Meldeadern 6 und 7 größer als die gestreckte Länge des Leitungsrohres.

## Patentansprüche

1. Einrichtung zur Lecküberwachung und Leckmeldung in einer flexiblen Rohrleitung mit einem Innenrohr (1) zum Transportieren von Wasser, einem das Innenrohr (1) konzentrisch umgebenden Außenrohr (2) sowie einer zwischen dem Innenrohr (1) und dem Außenrohr (2) befindlichen Wärmedämmschicht (3) auf der Basis von Polyurethan oder Polyisocyanurat und wenigstens einem in der Wärmedämmschicht (3) befindlichen in Längsrichtung der Rohrleitung verlaufenden Leiter (6,7), der bei Zutritt von Feuchtigkeit in den Raum zwischen den Rohren (1,2) ein Alarmsignal erzeugt, wobei der wenigstens eine Leiter (6,7) eine größere Länge aufweist als die Länge der Rohrleitung, **dadurch gekennzeichnet, daß** der wenigstens eine Leiter (6,7) auf einen gummielastischen Träger (5) aufgewickelt ist.

2. Einrichtung zur Lecküberwachung und Leckmeldung in einer flexiblen Rohrleitung mit einem Innenrohr (1) zum Transportieren von Wasser, einem das Innenrohr (1) konzentrisch umgebenden Außenrohr (2) sowie einer zwischen dem Innenrohr (1) und dem Außenrohr (2) befindlichen Wärmedämmschicht (3) auf der Basis von Polyurethan oder Polyisocyanurat und wenigstens einem in der Wärmedämmschicht (3) befindlichen in Längsrichtung der Rohrleitung verlaufenden Leiter (6,7), der bei Zutritt von Feuchtigkeit in den Raum zwischen den Rohren (1,2) ein Alarmsignal erzeugt, wobei der wenigstens eine Leiter (6,7) eine größere Länge aufweist als die Länge der Rohrleitung, **dadurch gekennzeichnet, daß** der wenigstens eine Leiter (6,7) wellenförmig auf einen bandförmigen Träger (8) aufgebracht ist.

3. Einrichtung nach Anspruch 1, **dadurch gekennzeichnet, daß** der Trägers (5) aus Polyamid oder Polyvinylchlorid besteht.

4. Einrichtung nach Anspruch 2, **dadurch gekennzeichnet, daß** der bandförmige Träger (8) eine Vielzahl von Durchbrechungen (8a) aufweist.

5. Einrichtung nach einem der Ansprüche 3 oder 4, **dadurch gekennzeichnet, daß** zwei Leiter (6,7) vorgesehen sind.

## Claims

1. Apparatus for leakage monitoring and leakage reporting in a flexible conduit pipe with an inner pipe (1) for carrying water, an outer sleeve (2) concentrically enclosing the inner pipe (1) as well as a heat-insulating layer (3) located between the inner pipe (1) and the outer pipe (2) on the basis of polyurethane or polyisocyanurat and at least one line (6, 7) located in the heat-insulating layer (3) running in the longitudinal direction of the conduit pipe, which, in case of penetration of moisture into the space between the pipes (1,2), generates an alarm signal, wherein at least one line (6,7) features a greater length than the length of the conduit pipe, **characterised in that** at least a line (6,7) is wound on a rubber-elastic carrier (5).

2. Apparatus for leakage monitoring and leakage reporting in a flexible conduit pipe with an inner pipe (1) for carrying water, an outer sleeve (2) concentrically enclosing the inner pipe (1) as well as a heat-insulating layer (3) on the basis of polyurethane or polyisocyanurat located between the inner pipe (1) and the outer pipe (2) and at least one line (6, 7) located in the heat-insulating layer (3) in the longitudinal direction of the conduit pipe, which, in case of penetration of moisture into the space between the pipes (1,2), generates an alarm signal, wherein at least one line (6,7) features a greater length than the length of the conduit pipe, **characterised in that** at least one line (6,7) is applied in wave-shape on a band-shaped carrier (8).

3. Apparatus according to claim 1, **characterised in that** the carrier (5) consists of polyamide or polyvinyl chloride.

4. Apparatus according to claim 2, **characterised in that** the band-shaped carrier (8) features a large number of openings (8a).

5. Apparatus according to one of the claims 3 or 4 **characterised in that** two lines (6, 7) are provided.

## Revendications

1. Dispositif de contrôle de fuites et de signalisation de fuites dans une conduite flexible comprenant un tube intérieur (1) destiné à transporter de l'eau, un tube extérieur (2) entourant le tube intérieur (1) de manière concentrique, ainsi qu'une couche de calorifugeage (3) se trouvant entre le tube intérieur (1) et le tube extérieur (2), sur la base de polyuréthanne ou de polyisocyanurate, et au moins un conducteur (6, 7) se trouvant dans la couche de calorifugeage (3) et s'étendant dans le sens longitudinal de la conduite, ce conducteur générant un signal d'alarme lors de la pénétration d'humidité dans l'espace entre les tubes (1, 2), l'au moins un conducteur (6, 7) présentant une longueur plus grande que la longueur de la conduite, **caractérisé en ce qu'**au moins l'un conducteur (6, 7) est enroulé sur un support (5) en caoutchouc élastique.

2. Dispositif de contrôle de fuites et de signalisation de fuites dans une conduite flexible comprenant un tube intérieur (1) destiné à transporter de l'eau, un tube extérieur (2) entourant le tube intérieur (1) de manière concentrique, ainsi qu'une couche de calorifugeage (3) se trouvant entre le tube intérieur (1) et le tube extérieur (2), sur la base de polyuréthanne ou de polyisocyanurate, et au moins un conducteur (6, 7) se trouvant dans la couche de calorifugeage (3) et s'étendant dans le sens longitudinal de la conduite, ce conducteur générant un signal d'alarme lors de la pénétration d'humidité dans l'espace entre les tubes (1, 2), l'au moins un conducteur (6, 7) présentant une longueur plus grande que la longueur de la conduite, **caractérisé en ce qu'**au moins l'un conducteur (6, 7) est enroulé sur un support (8) en forme de bande.

3. Dispositif selon la revendication 1, **caractérisé en ce que** le support (5) est en polyamide ou en chlorure de polyvinyle.

4. Dispositif selon la revendication 2, **caractérisé en ce que** le support (8) en forme de bande présente une pluralité d'ouvertures (8a).

5. Dispositif selon l'une quelconque des revendications 3 ou 4, **caractérisé en ce que** deux conducteurs (6, 7) sont prévus.
